# EUROPÄISCHE PATENTANMELDUNG

(11) **EP 4 491 548 A1**
(43) Veröffentlichungstag der Anmeldung: **15.01.2025**
(21) Anmeldenummer: 23184510.8
(22) Anmeldetag: 10.07.2023
(51) Int. Cl.: B65G 53/56, F16K 11/052

(54) **ROHRWEICHE**

(71) Anmelder: Terbeck, Hendrik, 46348 Raesfeld (DE)
(72) Erfinder: Terbeck, Hendrik, 46348 Raesfeld (DE)
(74) Vertreter: Patentanwälte Olbricht Buchhold Keulertz

(57) **Zusammenfassung**

Rohrweiche mit einem Gehäuse, drei Rohrleitungsanschlüssen (3, 4, 5) und einer Zunge, die innerhalb des Gehäuses zwischen zwei Endstellungen in der Art beweglich ist, dass eine Strömungsverbindung von einem ersten Rohrleitungsanschluss (3) wahlweise zu einem zweiten (4) oder zu einem dritten (5) Rohrleitungsanschluss geschaffen wird, wobei ein durch das Gehäuse gebildeter Absatz (23) an der inneren Oberfläche der Gehäusewand verläuft, welcher den Schwenkweg der Zunge eine Endstellung schaffend begrenzt und der Absatz dazu ausgestaltet ist, der Zunge unmittelbar anzuliegen.

## Beschreibung

Im Bereich der Tierhaltung sind automatische Fütterungsanlagen bekannt, bei denen das Futter als trockenes Granulat pneumatisch durch Rohrleitungen gefördert wird, wobei Luft das Transportmedium für das Futter darstellt, oder bei denen das Futter nass gefördert wird, mit Wasser als Transportmedium - Transportmedium und Futter werden nachfolgend zusammenfassend als Transportgut bezeichnet. Dabei kann z. B. eine Hauptrohrleitung vorgesehen sein, von der an mehreren Stellen Nebenrohrleitungen abzweigen und zu einzelnen Futterstellen führen. Rohrweichen ermöglichen es, das Futter gezielt aus der Hauptrohrleitung in bestimmte Nebenrohrleitung zu leiten und somit bestimmten Futterstellen zuzuführen. Problematisch ist, dass das Futter abrasive Eigenschaften aufweist und die Rohrweichen daher insbesondere bei trockenem Futter einem erheblichen Verschleiß unterliegen. Das betrifft einerseits das Gehäuse, andererseits aber auch die sogenannte Zunge, die verstellbar ist und innerhalb des Gehäuses das Futter aus einer ankommenden Hauptrohrleitung in eine von zwei Nebenrohrleitungen der Rohrweiche lenkt. Die Standzeit einer Rohrweiche ist daher dadurch begrenzt, dass verschleißbedingte Undichtigkeiten vom Gehäuse nach außen oder zwischen der Zunge und dem Gehäuse auftreten.

Die Undichtigkeiten sind insofern problematisch, als erstens Futter nach außen entweichen kann und zweitens Druckverluste auftreten, welche die Förderleistung insbesondere einer pneumatischen Fütterungsanlage beeinträchtigen, so dass die letzten der zu versorgenden Fütterungsstellen möglicherweise nur unzureichend mit Futter versorgt werden können. Dementsprechend erfordern festgestellte Undichtigkeiten eine möglichst umgehende Wartung oder einen Austausch der Rohrweiche.

Bei einer aus der Praxis bekannten Rohrweiche besteht das Gehäuse aus Metall. Es weist einen kastenartigen Grundkörper auf, in dem die bewegliche Zunge angeordnet ist. Rohrleitungsanschlüsse in Form kreisrunder Anschlussstutzen schließen an den Grundkörper an, um einen Anschluss der Rohrweiche an eine Futterleitung zu ermöglichen, die sich zu zwei Nebenleitungen verzweigt, oder um die Rohrweiche mittels zweier Anschlussstutzen in eine Hauptleitung einzubinden, von welcher der dritte Anschlussstutzen die Abzweigung in eine Nebenleitung ermöglicht, die zu einer Futterstelle führt. Die Zunge ragt bei diesen aus der Praxis bekannten Rohrleitungen aus dem kastenförmigen Grundkörper heraus und ist außerhalb des Grundkörpers schwenkbar gelagert.

Die EP 3 805 620 A2 lehrt eine Ventilanordnung in einem Gehäuse in Art einer Rohrweiche mit mehreren separaten Dichtungen, wobei vorgeschlagen wird, die Dichtungen in Nuten des Gehäuses einzupassen. Problematisch ist, dass zumindest jeweils eine Dichtung oder ein Abschnitt einer Dichtung im Förderstrom angeordnet ist und fördergutbedingt einem erheblichen Verschleiß unterliegt. Ebenso ist es auch der Praxis bekannt, an dem außen umlaufenden Rand der Zunge eine Dichtung vorzusehen, welche beispielsweise in eine in dem Rand der Zunge verlaufende Nut eingepasst ist. Auch diese Dichtungsgestaltung weist erfahrungsgemäß nur eine sehr begrenzte Standzeit auf.

Der Erfindung liegt die Aufgabe zugrunde, eine Rohrweiche dahingehend zu verbessern, dass sie einen verbesserten Schutz gegen das Auftreten von Undichtigkeiten ermöglicht und eine lange Standzeit aufweist.

Diese Aufgabe wird durch eine Rohrweiche nach Anspruch 1 gelöst. Merkmale der Erfindung werden nachfolgend erörtert, wobei weitere Ausgestaltungen der Erfindung unter anderem in den Unteransprüchen beschrieben werden, welche jeweils eigenständige erfinderische Weiterbildungen des Standes der Technik schaffen.

Die beschriebenen Gestaltungsmerkmale können im Zusammenhang mit der Erfindung verwirklicht werden oder auch unabhängig von der Erfindung eigenständig erfinderisch sein, und sie können entweder einzeln und unabhängig voneinander oder auch in einer beliebigen Kombination verwirklicht werden, einschließlich der Verwirklichung sämtlicher genannter Merkmale, sofern eine Kombination nicht ausdrücklich oder technisch zwingend ausgeschlossen ist.

Die Erfindung schlägt mit anderen Worten vor, dass sich die Gehäusewand teilweise nicht nach außen erweitert, um eine Tasche zu bilden, sondern vielmehr befindet sich ein Absatz im Inneren des Gehäuses, beispielsweise indem eine Rippe an der inneren Oberfläche der Gehäusewand verläuft. Bei dieser Ausgestaltung liegt die Zunge dicht dem Absatz an, z. B. der Rippe, da der Absatz eine Anschlagkante für die Zunge bildet und den Schwenkweg der Zunge begrenzt. In einer bevorzugten Ausgestaltung kann sich der Absatz in den Strömungsquerschnitt, das heißt in den inneren, freien Gehäusequerschnitt erstrecken. Überraschenderweise hat sich gezeigt, dass auch ohne eine zusätzliche, gemeinhin verschleißsensitive Dichtung, insbesondere eine die Zunge randseitig umlaufende Dichtung, mit den vorgeschlagenen Mitteln eine hohe Abdichtung erzielt werden kann. Die Abdichtung zwischen Zunge und Absatz wird im praktischen Betrieb der Rohrweiche unter anderem durch Anlagerungen von Futter verbessert. Im Gegensatz zu den aus der Praxis bekannten Rohrweichen wird vorliegend eine Lösung vorgeschlagen, mit welcher besonders vorteilhaft auf sämtliche zusätzlichen Dichtungen in Verbindung mit der Zunge verzichtet werden kann. Ersten kann dadurch die Aufbau einer vorschlagsgemäßen Rohrweiche ressourcenschonend wesentlich vereinfacht werden. Zweitens können für die Rohrweiche besonders verschleißarme Materialien verwendet werden, so dass die Standzeit verlängert wird und deutlich weniger gesundheitsgefährdende Verschleißprodukte mit dem Futter in Tiere gelangen können.

Für eine vorteilhafte Ausgestaltung kann das Gehäuse der Rohrweiche zweiteilig ausgestaltet sein. Auf diese Weise wird die Montage der einzelnen Bauteile bei der Herstellung der Rohrweiche vereinfacht. So ist es besonders einfach, bei zunächst geöffnetem Gehäuse die Zunge und auch deren Welle, welche die Schwenkachse für die Beweglichkeit der Zunge bildet, innerhalb des Gehäuses anzuordnen und dann das Gehäuse zu schließen, indem die beiden Bauteile des Gehäuses zusammengefügt werden. Vorteilhaft ist weiterhin vorgesehen, dass die Zunge sich nicht nur teilweise in das Gehäuse erstreckt, sondern vollständig innerhalb des Gehäuses angeordnet ist, und dass auch die Schwenkachse als die gedachte Linie, um welche die Zunge beweglich ist, innerhalb des Gehäuses liegt. Die Zunge kann beispielsweise zwischen den beiden Teilen des Gehäuses in der Art angeordnet sein, dass vor der Montage der beiden Teile die Zunge in den einen Teil des Gehäuses eingesetzt werden kann und erst dann das Gehäuse durch Montage des zweiten Teils geschlossen wird. Auf diese Weise wird erreicht, dass die Zunge das Gehäuse nicht durchdringt. So wird das Problem vermieden, die bewegliche Zunge dort gegenüber dem Gehäuse abzudichten, wo sie das Gehäuse durchdringt.

Die beiden Teile des Gehäuses können unlösbar miteinander verbunden werden, z.B. durch Verklebung, durch eine Löt- oder Schweißverbindung, oder dadurch, dass die beiden Teile mechanisch miteinander verbunden, z.B. verclipst werden. Vorteilhaft jedoch können die beiden Teile des Gehäuses lösbar miteinander verbunden sein, so dass auf diese Weise Wartungsarbeiten erleichtert oder überhaupt erst ermöglicht werden, da das Innere des Gehäuses problemlos zugänglich ist. Die Nutzungsdauer einzelner Bauteile der Rohrweiche kann auf diese Weise maximiert werden. Beispielsweise können die beiden Gehäuseteile miteinander verschraubt oder verklammert werden.

In einer vorteilhaften Ausgestaltung kann das zweiteilige Gehäuse in Form von zwei Halbschalen ausgestaltet sein, wobei die Trennlinie zwischen den beiden Teilen in Längsrichtung der Rohrweiche, also in der Richtung verläuft, in welcher bei Benutzung der Futtermittel- oder Produktstrom durch die Rohrweiche strömt. Dementsprechend können die beiden Halbschalen jeweils einen Teilumfang der Anschlussstutzen bilden, falls die Rohrleitungsanschlüsse der Rohrweiche in Form von Anschlussstutzen ausgestaltet sind.

Die Halbschalen können vorteilhaft, je nach verwendetem Material, im Druckguss- (Metall) oder Spritzgussverfahren (Kunststoff) hergestellt werden. Im Vergleich dazu, ein zunächst plattenförmiges Halbzeug zu verformen, um das gesamte Gehäuse oder zumindest einen Gehäuse-Grundkörper der Rohrweiche zu schaffen, ergibt sich ein erheblich größerer konstruktiver Freiraum bei der Formgebung und auch bei der Oberflächengestaltung der Rohrweiche.

Beispielsweise können durch das Gießverfahren unterschiedliche Wandstärken in ein und demselben Bauteil, z.B. in einer Halbschale erzeugt werden. Bereiche der Rohrweiche, die einem besonderen Verschleiß ausgesetzt sind, können daher mittels einer lokal größeren Wandstärke eine längere Nutzungsdauer bzw. Standzeit der Rohrweiche ermöglichen.

Durch das Gießverfahren kann ein Vorsprung im Inneren des Gehäuses geschaffen werden, um durch den Vorsprung selbst oder durch eine Abrisskante, die in Strömungsrichtung am Ende des Vorsprungs geschaffen ist, bewusste Verwirbelungen des Produktstroms zu bewirken. Oder der Vorsprung kann als Abweiser fungieren und bestimmte, in Strömungsrichtung nachgeschaltete Bereiche der Rohrweiche vor einem unmittelbaren Anprall des Produktstroms zu schützen.

Durch das Gießverfahren können Vertiefungen in der inneren Oberfläche des Gehäuses ermöglicht werden, z.B. für die Zunge. So kann erreicht werden, dass die Außenkante der Zunge in ihren beiden unterschiedlichen Stellungen jeweils geschützt in einer solchen Vertiefung liegt. Die Außenkante der Zunge ist auf diese Weise gut gegen den unmittelbaren Anprall des Produktstroms und den damit verbundenen Verschleiß geschützt, so dass Undichtigkeiten zwischen der Zunge und dem Gehäuse möglichst vermieden werden. Zudem kann dadurch in den beiden unterschiedlichen Stellungen der Zunge eine Abdichtung der Zunge gegenüber dem Gehäuse auf der jeweiligen Fläche der Zunge bewirkt werden, statt die Abdichtung am äußeren Umfangsrand der Zunge zu bewirken. Bei der Schwenkbewegung der Zunge zwischen ihren beiden Stellungen reibt die Zunge mit ihrem äußeren Umfangsrand am Gehäuse, so dass eine dort befindliche Dichtung aufgrund der Reibung einem erheblichen Verschleiß ausgesetzt ist.

Durch das Gießverfahren können in der inneren Oberfläche des Gehäuses zwei gegenüberliegende Lagerstellen geschaffen werden, in denen der die Schwenkachse der Zunge bildende Achskörper gelagert werden kann, so dass nicht nur eine Durchdringung des Gehäuses durch die Zunge selbst, sondern auch eine Durchdringung des Gehäuses durch die Schwenkachse weitgehend vermieden werden kann und das Gehäuse auf diese Weise optimal dicht ausgestaltet werden kann. Lediglich an einem seiner beiden Enden kann der die Schwenkachse bildende Achskörper aus dem Gehäuse herausragen, so dass dort Antriebsmittel angeschlossen werden können, die als Stellantrieb zur Schwenkverstellung der Zunge dienen.

Die Schaffung der oben erwähnten Vorsprünge, Vertiefungen oder auch Lagerstellen stellen ebenfalls die Ausgestaltung des Gehäuses mit unterschiedlichen Wandstärken dar, ebenso wie die gegen den Verschleiß vorgesehenen unterschiedlichen Wandstärken.

In einer besonders erfinderischen Weiterentwicklung ist stromaufwärts vor der Zunge eine Verwirbelungskante vorgesehen. Durch die Verwirbelungen des Produktstroms wird dessen direkter Anprall auf die Zunge vermieden, wodurch die abrasive Belastung der Zunge verringert und deren Nutzungs- oder Lebensdauer verlängert wird.

Die Verwirbelungskante kann in einer als vorteilhaft erachteten Ausgestaltung durch das Gehäuse selbst gebildet werden, also durch dessen innere Oberfläche, so dass nicht die Montage zusätzlicher Elemente erforderlich ist, insbesondere keiner Elemente, welche das Gehäuse durchsetzen und ggf. eine Fehlerquelle aufgrund eventueller Undichtigkeiten darstellen können.

Die Verwirbelungskante kann dadurch geschaffen werden, dass sich der innere, freie Gehäusequerschnitt erweitert. Im Vergleich zu Störkonturen, die sich in den Strömungsquerschnitt der Rohrweiche erstrecken, um die Verwirbelungskante zu schaffen, werden die Strömungsverluste in der Rohrleitung reduziert und insbesondere wird eine Geometrie geschaffen, die nicht quer in den Strömungsweg ragt und dem direkten Anprall der Granulatkörper mit besonders hoher abrasive Wirkung ausgesetzt ist.

Die Verwirbelungskante kann dadurch geschaffen werden, dass das Gehäuse der Rohrweiche in Strömungsrichtung gesehen zunächst eine größere Wandstärke aufweist, die sich dann unter Schaffung der Verwirbelungskante reduziert, so dass sich der Querschnitt des Strömungswegs plötzlich erweitert.

Wenn die Verwirbelungskante jedoch dadurch geschaffen wird, dass eine Störkontur in den Strömungsquerschnitt der Rohrweiche ragt, kann diese Störkontur vorteilhaft eine Länge aufweisen, die in Strömungs- bzw. Fließrichtung des Futters wenigstens 10 mm lang ist, vorteilhaft sogar 20 bis 25 mm lang ist. Durch die größere Länge wird die Standzeit der Rohrweiche verlängert, und insbesondere ergibt sich die Möglichkeit, die Störkontur sanft bis zur Verwirbelungskante ansteigen zu lassen, was den abrasiven Verschleiß der Störkontur verringert.

In einer Ausgestaltung weist das Gehäuse der Rohrweiche in der inneren Oberfläche der Gehäusewand Taschen auf, also Vertiefungen, Nuten oder dergleichen, so dass jedenfalls die Zunge der Rohrweiche in einer oder in beiden Endstellungen in eine solche Tasche eintauchen kann. Auf diese Weise wird insbesondere die umlaufende Außenkante der Zunge, die für eine Abdichtung gegenüber dem Gehäuse der Rohrweiche wesentlich ist, geschützt angeordnet und ist dem direkten Anprall der Granulatkörper nicht ausgesetzt.

Die Zunge ist schwenkbar gelagert. Die Welle, die als Schwenkachse der Zunge dient, ist innerhalb des Gehäuses der Rohrweiche angeordnet. Auf diese Weise wird die Abdichtung der Welle erheblich vereinfacht und dementsprechend die Wirksamkeit der Abdichtung besonders zuverlässig gewährleistet, da ansonsten, bei einer außenliegenden Welle, die Durchführung der Zunge von der Welle in das Innere des Gehäuses abgedichtet werden muss, wie das aus der Praxis bekannt ist.

Die Zweiteiligkeit des Gehäuses kann besonders vorteilhaft dadurch erzielt werden, dass das Gehäuse in Strömungsrichtung geteilt ist und in Art von zwei Halbschalen ausgestaltet ist, von denen jede jeweils lediglich den halben Umfang der eingangs erwähnten Haupt- und Nebenrohrleitungen bildet.

Vorteilhaft kann das Gehäuse aus Kunststoff bestehen. Erstens kann ein Kunststoff verwendet werden, der gegenüber abrasiven Belastungen besonders verschleißfest ist und beispielsweise längere Standzeiten ermöglicht als ein aus Metall bestehendes Bauteil gleicher Formgebung.

Zweitens ermöglicht Kunststoff eine wirtschaftliche Herstellung des Gehäuses beispielsweise im Spritzgussverfahren mit den oben bereits erwähnten Vorteilen dieses Herstellungsverfahrens. Drittens lassen sich im Spritzgießverfahren problemlos unterschiedliche Wandstärken innerhalb eines Gehäusebauteils verwirklichen. Insbesondere falls sich in der Praxis herausstellen sollte, dass bestimmte Bereiche des Gehäuses vorschnell verschleißen, beispielsweise in Abhängigkeit von dem jeweils verwendeten Futter und dessen abrasiven Eigenschaften, kann mit geringem konstruktiven Aufwand die Spritzgießform überarbeitet werden, um an den besonders belasteten Stellen die Wandstärke des Gehäuses zu vergrößern und so die Standzeit der dann neu hergestellten Rohrweichen zu verbessern. Verbesserungen können so mit geringem Aufwand in eine laufende Serienproduktion der Gehäuse einfließen.

Ein aus Kunststoff bestehendes Gehäuse kann vorteilhaft in elektrostatischer Hinsicht ableitfähig ausgestaltet sein, um eine statische Aufladung zu vermeiden. Dies kann beispielsweise in an sich bekannter Weise durch entsprechende Additive in dem Kunststoffmaterial erreicht werden.

Eine elektrisch leitfähige Anbindung des Gehäuses an ein Erdungselement kann auf einfache Weise dadurch verwirklicht werden, dass Halterungen, die in einem Gebäude zur Befestigung der Futter-Rohrleitungen an einer Wand oder unter einer Decke vorgesehen sein können, elektrisch leitfähig mit dem Gehäuse der Rohrweiche verbunden werden.

Bei dem zweiteiligen Gehäuse kann die Abdichtung benachbarter Gehäusebauteile auf einfache Weise dadurch erfolgen, dass bereits bei der Herstellung der Bauteile Dichtungselemente erzeugt werden. Die beiden Gehäuseteile bilden daher gemeinsam eine das Gehäuse nach außen abdichtende Dichtung. Beispielsweise kann das eine Bauteil eine Nut aufweisen, in welche eine Dichtungsrippe des zweiten Bauteils eintaucht, oder das eine Bauteil kann eine Planfläche bereitstellen, welcher eine Dichtungsrippe des zweiten Bauteils anliegt. Die Dichtungsrippe kann eine spitz endende, beispielsweise dreieckige Querschnittskontur aufweisen, so dass sie mit ihrer Spitze dem Nutgrund oder der Planfläche des erstgenannten Bauteils anliegt. Der geringe Materialquerschnitt im Bereich der Spitze ermöglicht die Verformung der Dichtungsrippe und somit eine dichte Anlage der beiden Bauteile aneinander. Insbesondere wenn das Gehäuse aus Kunststoff besteht, ist die erläuterte Dichtungsgeometrie problemlos und wirtschaftlich herstellbar.

Für eine Ausgestaltung der Erfindung kann eine zusätzliche Dichtung an der Zunge vorgesehen sein, insbesondere für solche Fälle, in denen eine besonders hohe Abdichtungsleistung erforderlich ist, beispielsweise wenn Flüssigkeiten als Transportmedium verwendet werden und/oder wenn die Strömungsgeschwindigkeit des Transportguts gering bzw. ein Strömungsdruck gering ist, welcher bei Ablenkung der Strömung auf die Zunge einwirkt.

In einer Ausgestaltung kann die Zunge eine außen umlaufende Dichtlippe aufweisen, die aus einem anderen, weicheren Material besteht als andere Bestandteile der Zunge.

Beispielsweise kann die Zunge in einer ersten Ausgestaltung sandwichartig zwei äußere Zungenplatten aus einem ersten Material mit einer ersten Härte aufweisen, die beispielsweise aus Kunststoff bestehen können, und dazwischen eine Dichtungsscheibe aus einem zweiten, weicheren Material, beispielsweise aus einem Elastomerwerkstoff. Die Dichtungsscheibe kann einen größeren Umfang aufweisen als die beiden Zungenplatten, so dass sie die außen umlaufende Dichtlippe bildet. Wenn die beiden äußeren Zungenplatten miteinander verbunden werden, beispielsweise miteinander verschraubt werden, kann durch den Anpressdruck der Zungenplatten erreicht werden, dass die Dichtungsscheibe verpresst wird und noch weiter nach außen über die beiden Zungenplatten hinausragt. Auf diese Weise lässt sich die Abdichtungswirkung der Zunge innerhalb des Gehäuses der Rohrweiche einstellen.

In einer zweiten Ausgestaltung kann ein Aufbau der Zunge in der Art vorgesehen sein, dass eine Dichtungsscheibe aus einem Elastomerwerkstoff die dem anströmenden Futterstrom zugewandte Außenfläche der Zunge bildet, und dahinter, durch den Elastomerwerkstoff vor Abrasion geschützt, ist eine Zungenplatte aus einem härteren Werkstoff angeordnet, die aufgrund ihrer Formstabilität als Träger für die Dichtungsscheibe dient.

Da die Zunge in ihren beiden unterschiedlichen Endstellungen von beiden Seiten der Beaufschlagung durch den anströmenden Futterstrom ausgesetzt ist, kann eine Ausgestaltung der Zunge in Umkehrung der oben genannten ersten Ausgestaltung vorgesehen sein: Die Zungenplatte aus härterem Werkstoff, die wie bei der oben genannten zweiten Ausgestaltung als Träger dient, stellt in diesem dritten Fall die mittlere Schicht einer sandwichartig aufgebauten Zunge dar. Die beiden äußeren Schichten werden jeweils durch eine Dichtungsscheibe aus einem Elastomerwerkstoff gebildet. Auf diese Weise ist in beiden Endstellungen der Zunge, also in beiden Weichenstellungen der Rohrweiche, jeweils eine Oberfläche der Zunge dem Futtermittelstrom ausgesetzt, die aufgrund der Werkstoffeigenschaften des Elastomerwerkstoffs gut gegen Abrasion geschützt ist.

In einer Ausgestaltung kann die Zunge aus Metall an Stelle von Kunststoff bestehen, beispielsweise aus Edelstahl. Abgesehen von einer hohen Standfestigkeit, also einer langen Nutzungsdauer, bietet diese Werkstoffwahl auch den Vorteil, dass so eine elektrostatisch ableitfähige Ausgestaltung der Rohrweiche unterstützt werden kann. Vorteilhafterweise kann die Zunge einstückig sein, und zwar unabhängig von dem verwendeten Material.

Die umlaufende Dichtlippe der Zunge kann sich durch die Welle erstrecken, die als Schwenkachse für die Zunge vorgesehen ist. Die beispielsweise aus Metall bestehende Welle kann zu diesem Zweck geschlitzt sein, so dass ein einteiliges Bauteil, beispielsweise die oben erwähnte Dichtungsscheibe, sowohl die umlaufende Dichtungslippe an der Zunge bilden kann als auch eine Dichtleiste auf der von der Zunge abgewandten Rückseite der Welle bilden kann. Wenn die Welle nahe an einer Gehäusewand der Rohrweiche verläuft, kann durch die Dichtleiste eine Abdichtung zwischen der Welle und dieser Gehäusewand auf konstruktiv besonders einfache Weise erreicht werden.

Der erfindungsgemäße Absatz, beispielweise als Rippe, kann dazu beitragen, eine etwaige Dichtungslippe zu stabilisieren und somit eine bessere Abdichtung zu gewährleisten.

Die Innenkontur des Gehäuses kann vorteilhaft eine Verzweigung des Strömungswegs von der Hauptrohrleitung zu den beiden neben Rohrleitungen schaffen, bei der ein runder, insbesondere kreisrunder Querschnitt der Hauptrohrleitung sich in der Art gabelt, dass auch im Übergangsbereich von der Hauptrohrleitung zu einer Nebenrohrleitung eine zumindest halbrunde Querschnittskontur des jeweiligen Rohrleitungsabschnitts, der den Übergangsbereich bildet, für das Futter beibehalten wird. Ein Übergang beispielsweise von einem runden zu einem ausschließlich eckigen Rohrleitungsabschnitt kann auf diese Weise vermieden werden. Strömungs- bzw. Druckverluste einerseits werden auf diese Weise ebenso vermieden wie Übergangsflächen zwischen eckigen und den dann anschließenden runden Gehäuseabschnitten beim Übergang in die Nebenrohrleitungen, wobei derartige Übergangsflächen ansonsten abrasiv besonders hoch belastet sind und dementsprechend schnell verschleißen können.

Ausführungsbeispiele der Erfindung werden anhand der rein schematischen Darstellungen nachfolgend näher beschrieben.

Dabei zeigt
- Fig. 1: eine perspektivische Ansicht auf das Innere eines zwei Halbschalen aufweisenden ersten Ausführungsbeispiels einer Rohrweiche, bei entfernter oberer Halbschale,
- Fig. 2: eine Ansicht ähnlich Fig. 1, wobei sich eine Zunge der Rohrweiche in einer anderen Endstellung als in Fig. 1 befindet,
- Fig. 3: eine Ansicht von unten auf die Halbschale der Fig. 1 und 2,
- Fig. 4: eine Ansicht ähnlich Fig. 1 auf die gesamte Rohrweiche mit beiden Halbschalen,
- Fig. 5 - 9: Ansichten und Schnitte aus unterschiedlichen Blickrichtungen auf ein Gehäuseunterteil eines zweiten Ausführungsbeispiels einer Rohrweiche.

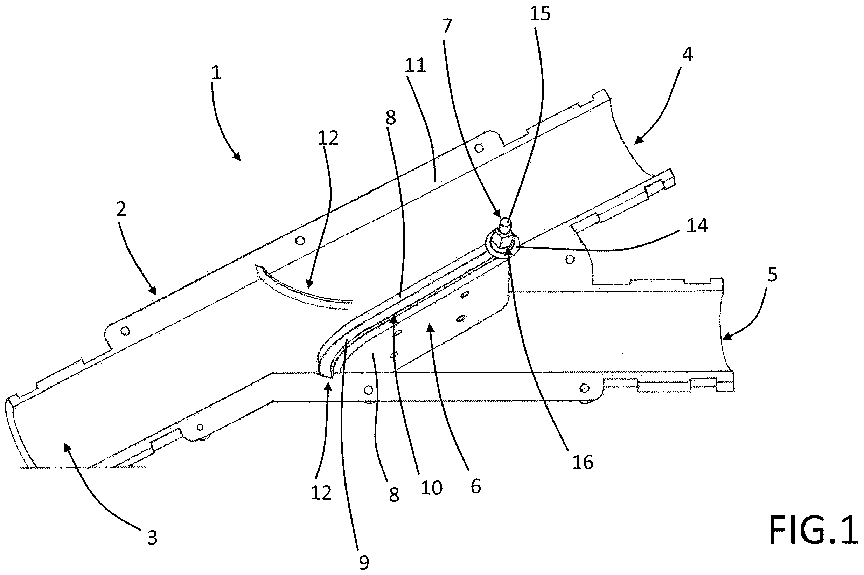

Die Fig. 1-4 dienen dazu, verschiedene Merkmale der Erfindung darzustellen, wobei einzelne, erfindungswesentliche Merkmale, beispielsweise der Absatz bzw. eine Rippe 23 aus darstellungsgründen nicht zu sehen sind.

Fig. 1 zeigt nur teilweise ein erstes Ausführungsbeispiel einer Rohrweiche 1, die ein ebenfalls lediglich teilweise dargestelltes Gehäuse 2 aufweist, welches einen Abschnitt einer Hauptrohrleitung 3 aufweist, der sich zu zwei Nebenrohrleitungen 4 und 5 verzweigt. Die Rohrweiche 1 ist dazu bestimmt, in einer Rohrleitung einer Fütterungsanlage verwendet zu werden, wobei das Futter in Form von trockenem Granulat pneumatisch durch die Rohrleitung gefördert werden soll. Um den Strom des Futtermittels wahlweise in die oben dargestellte Nebenrohrleitung 4 zu führen, die mit der Hauptrohrleitung 3 fluchtet, oder in die davon abzweigende unten dargestellte Nebenrohrleitung 5, ist im Inneren des Gehäuses 2 eine Zunge 6 angeordnet, die um eine Schwenkachse 7 schwenkbeweglich gelagert ist. Auf diese Weise kann die Rohrweiche 1 das Futter zu einer von wahlweise zwei Futterstellen leiten.

Je nach Ausgestaltung der Fütterungsanlage kann auch vorgesehen sein, dass die Hauptrohrleitung 3 zusammen mit der Nebenrohrleitung 4 einen Abschnitt einer insgesamt längeren Hauptrohrleitung bildet, von dem die Nebenrohrleitung 5 abzweigt und zu einem Futterplatz führt. Weitere gleichartige Rohrweichen 1 können in dieser insgesamt längeren Hauptrohrleitung angeordnet sein, um auf diese Weise Futter jeweils zu einem bestimmten von mehreren Futterplätzen leiten zu können.

Für eine besonders hohe Abdichtung ist die Zunge 6 sandwichartig aufgebaut und weist zwei äußere Zungenplatten 8 auf, die miteinander verschraubt sind, wobei zwischen den beiden Zungenplatten 8 eine Dichtungsscheibe 9 aus einem Elastomerwerkstoff angeordnet ist. Die Dichtungsscheibe 9 weist einen größeren Umfang auf als die Zungenplatten 8, so dass sie eine außen umlaufende Dichtlippe 10 der Zunge 6 bildet.

Fig. 1 zeigt einen Blick von oben in einen unteren Gehäuseteil 11 des zweiteiligen Gehäuses 2. Dabei ist erkennbar, dass die Dichtlippe 10 in ihren beiden Endstellungen jeweils in die Wand des Gehäuses 2 eintauchen kann. Zu diesem Zweck sind Taschen 12 im Inneren des Gehäuses vorgesehen, welche die Dichtlippe 10 aufnehmen. In der dargestellten ersten Endstellung der Zunge 6 ist die Rohrweiche 1 gemäß Fig. 1 so eingestellt, dass der Futtermittelstrom geradlinig von der ersten Hauptrohrleitung 3 in die obere Nebenrohrleitung 4 geleitet wird.

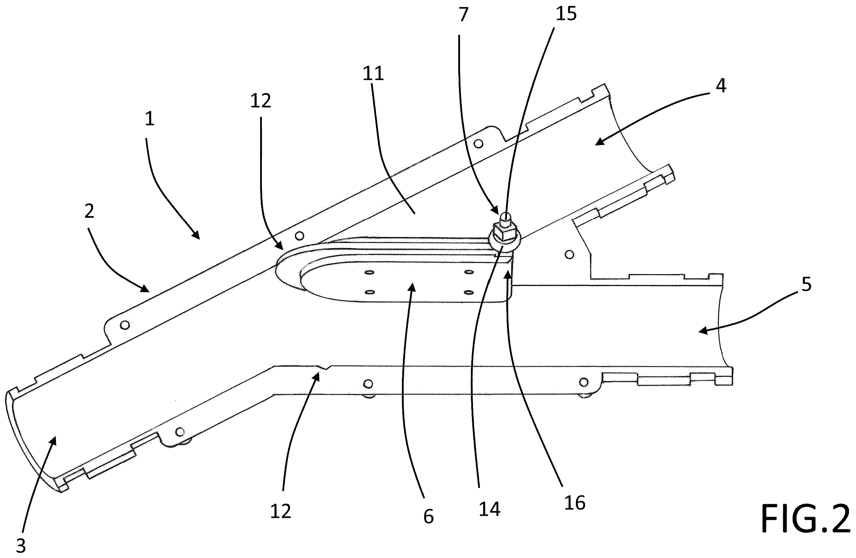

Fig. 2 zeigt bei gleicher Ausrichtung des unteren Gehäuseteils 11 die Zunge 6 in ihrer anderen Endstellung, in welcher der Futtermittelstrom aus der Hauptrohrleitung 3 in die untere Nebenrohrleitung 5 geleitet wird. Oberhalb der Zunge 6 ist ein Dichtungsring 14 ersichtlich, der um die Schwenkachse 7 verläuft. Gewindezapfen 15 bilden die beiden Enden einer Welle 16, welche die Zunge 6 trägt und von ihr großteils verdeckt wird, und welche schwenkbeweglich innerhalb des Gehäuses 2 gelagert ist.

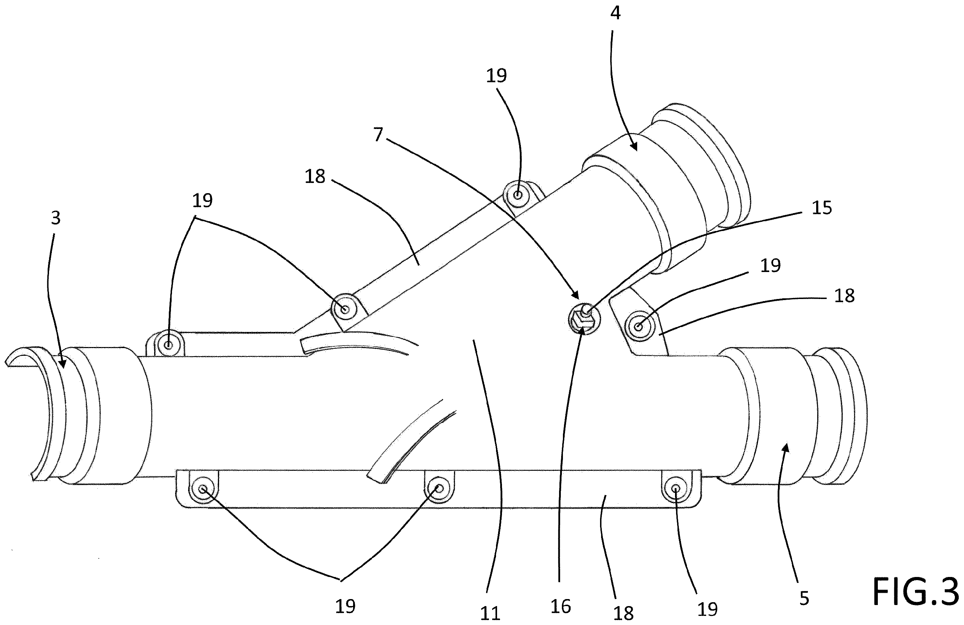

Fig. 3 zeigt in einer perspektivischen Ansicht ähnlich wie die Fig. 1 und 2 einen Blick auf die Unterseite des Gehäuseteils 11. Ein Gewindezapfen 15 der Welle 16 ragt aus dem Gehäuseteil 11 heraus. Auf diese Weise kann ein Betätigungselement von außen an die Welle 16 anschließen und eine Schwenkbewegung um die Schwenkachse bewirken, so dass auf diese Weise die Zunge 6 in die gewünschte Endstellung gesteuert werden kann. Flansche 18 ragen im Vergleich zu den Rohrleitungsabschnitten 3, 4 und 5 am Gehäuseteil 11 weiter nach außen und weisen Bohrungen 19 auf, so dass das Gehäuseteil 11 und ein damit zusammenwirkender zweiter Gehäuseteil miteinander verschraubt werden können.

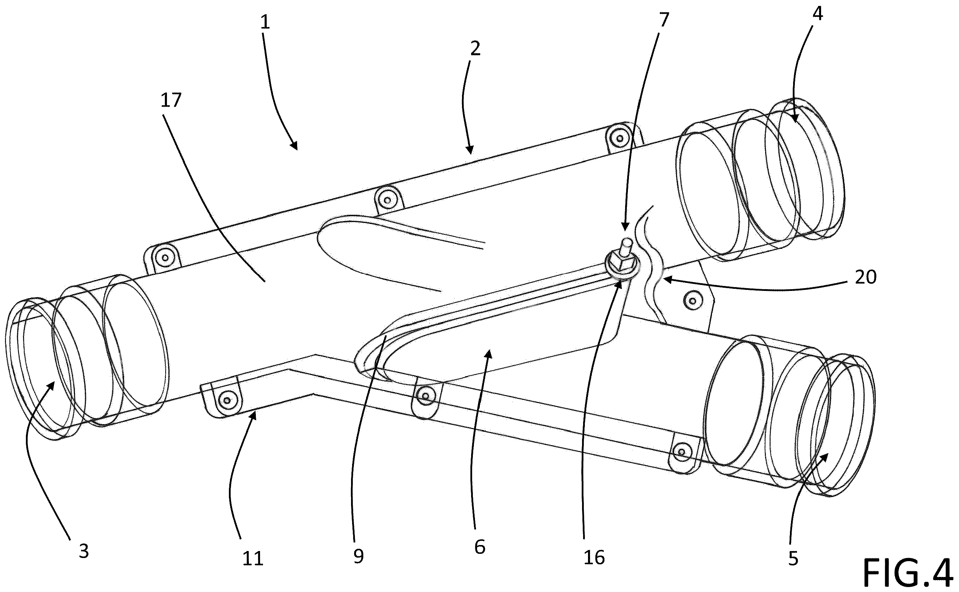

Fig. 4 zeigt in derselben Perspektive wie die übrigen Zeichnungen das Gehäuse 2 der Rohrweiche 1, wobei ein oberer Gehäuseteil 17 auf den unteren Gehäuseteil 11 aufgesetzt ist, die beiden Gehäuseteile 11 und 17 jedoch noch nicht miteinander verschraubt sind. Der obere Gehäuseteil 17 ist transparent dargestellt, so dass die Zunge 6 erkennbar ist. In Strömungsrichtung hinter der Schwenkachse 7 und somit auf der von der Zunge 6 abgewandten Seite verläuft nahe der Welle 16 ein gebogener Wandabschnitt 20 des Gehäuses 2 konzentrisch um die Welle 16. Die Welle 16 ist mit einem aus der Zeichnung nicht ersichtlichen Schlitz versehen. Die Dichtungsscheibe 9 erstreckt sich über die Zungenplatten 8 hinweg und durch den Schlitz der Welle 16 bis auf die sogenannte hintere, von der Zunge 6 abgewandten Seite der Welle 16, ragt dort über die Welle 16 hinaus bildet dort eine Dichtleiste, die sich bis zum gebogenen Wandabschnitt 20 erstreckt und diesem abdichtend anlegt. Der gebogene Wandabschnitt 20 ist so bemessen, dass in beiden Endstellungen und sämtlichen Zwischenstellungen der Zunge 6 die Dichtleiste dem Wandabschnitt abdichtend anlegt.

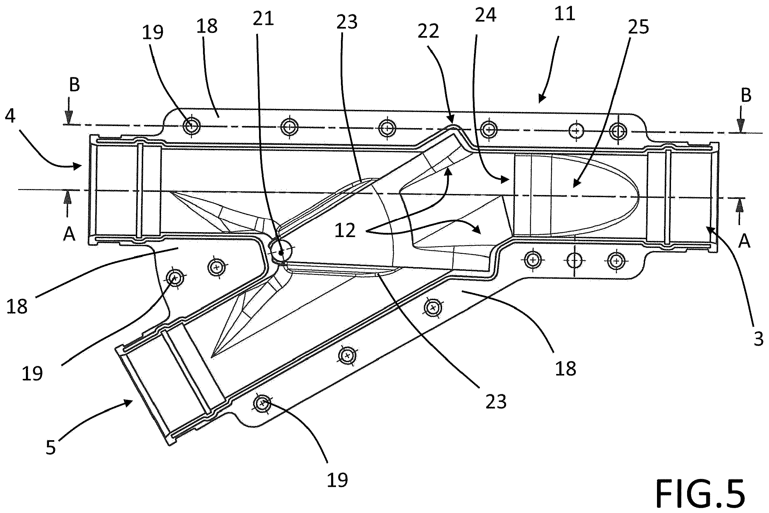

Fig. 5 zeigt ähnlich wie Fig. 1 und 2 eine Ansicht von oben in ein zweites Ausführungsbeispiel eines unteren Gehäuseteils 11. Aufgrund der weitgehenden Übereinstimmung mit dem Ausführungsbeispiel der Fig. 1 bis 4 werden nachfolgend lediglich einige Aspekte erläutert, die bei dem zweiten Ausführungsbeispiel der Fig. 5 bis 9 anders ausgestaltet als bei dem ersten Ausführungsbeispiel der Fig. 1 bis 4 bzw. gar nicht dargestellt sind, oder die bei dem ersten Ausführungsbeispiel bislang nicht erwähnt worden sind. Die nachfolgend beschriebenen Fig. 5-9 dienen daher insbesondere dazu, erfindungswesentliche Merkmale wie den Absatz in Gestalt einer Rippe 23 darzustellen.

Eine Achsbohrung 21 dient dazu, die Welle 16 in dem unteren Gehäuseteil 11 aufzunehmen und zu führen, wobei ein zugeordnetes oberes Gehäuseteil 17 eine vergleichbare Achsbohrung 21 aufweist.

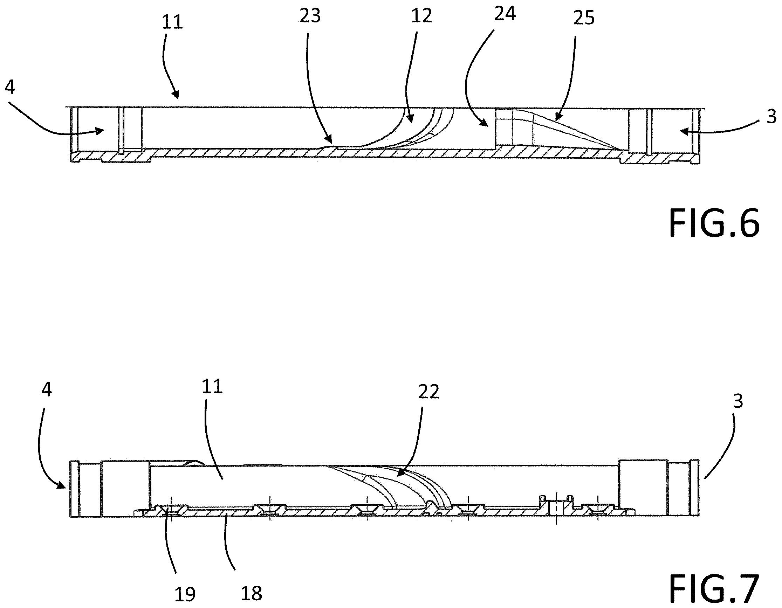

Fig. 6 zeigt einen Schnitt entlang der Linie A-A in Fig. 5 und macht deutlich, dass bei dem zweiten Ausführungsbeispiel neben den Taschen 12 , welche durch Erweiterungen 22 des Gehäuses 2 nach außen geschaffen sind, weiterhin innen verlaufende Absätze sichtbar sind, die in Fig. 6 in Form einer Rippe 23. Weiterhin ist aus Fig. 6 ersichtlich, dass der Zunge 6, nämlich den Erweiterungen 22, in Strömungsrichtung eine Verwirbelungskante 24 vorgeschaltet ist, die als das Ende einer Störkontur 25 ausgestaltet ist. Fig. 6 zeigt, dass die Verwirbelungskante 24 höher ist als die Störkontur 25. Die wird dadurch erreicht, dass die Verwirbelungskante 24 bis in die Wandstärke des Gehäuses 2 hinein verläuft. Bei dem in Fig. 6 dargestellten unteren Gehäuseteil 11 ändert sich die Wandstärke stufenartig, so dass dadurch die Verwirbelungskante 24 nicht nur durch das Ende der Störkontur 25, sondern auch durch die Stufe in der Wandstärke des unteren Gehäuseteils 11 geschaffen ist.

Die Störkontur 25 steigt in Strömungsrichtung zunächst ähnlich einer Rampe allmählich und kontinuierlich an, weist dann einen Übergangsbereich auf, in dem der Anstieg in Art einer Verrundung abnimmt, und weist schließlich einen Verschleißbereich auf, in welchem die Höhe der Störkontur bis zur Verwirbelungskante 24 gleich bleibt und der aufgrund seiner Länge auch angesichts der abrasiven Belastungen nur sehr langsam verschleißt und eine dementsprechend lange Nutzungsdauer des Gehäuses 2 ermöglicht.

Fig. 7 zeigt einen Schnitt entlang der Linie B-B in Fig. 5 und zeigt die Erweiterung 22 des Gehäuses 2 sowie den Flansch 18 mit den Bohrungen 19. Gut sichtbar sind die Rippen 23, welche den Schwenkweg der Zunge begrenzen und dieser unmittelbar anliegen.

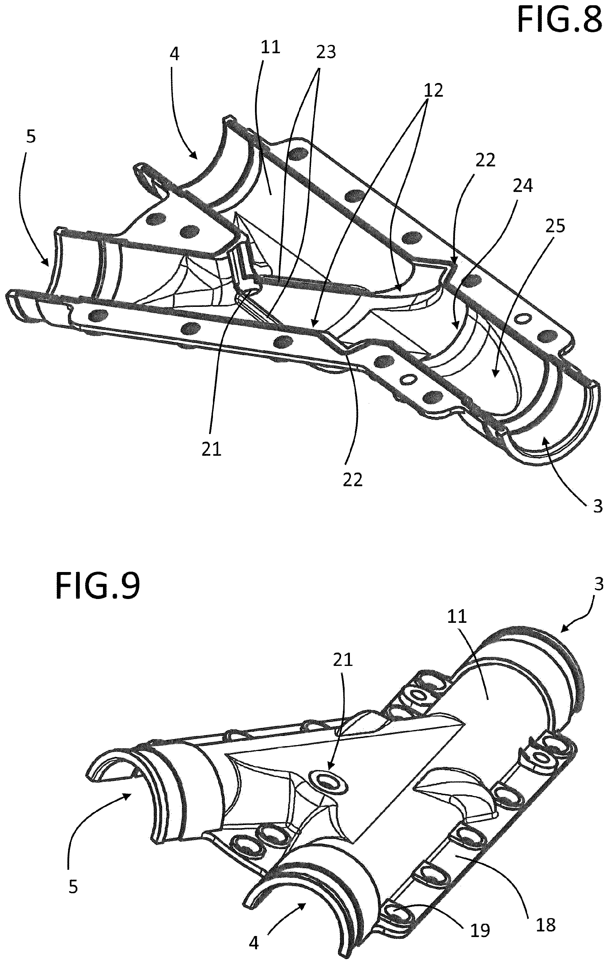

Fig. 8 zeigt einen perspektivischen Blick in das Innere des unteren Gehäuseteils 11 und Fig. 9 einen perspektivischen Blick von außen auf den unteren Gehäuseteil 11 des zweiten Ausführungsbeispiels.

### Bezugszeichen:

- 1: Rohrweiche
- 2: Gehäuse
- 3: Hauptrohrleitung
- 4: Obere Nebenrohrleitung
- 5: Untere Nebenrohrleitung
- 6: Zunge
- 7: Schwenkachse
- 8: Zungenplatte
- 9: Dichtungsscheibe
- 10: Dichtlippe
- 11: Unterer Gehäuseteil
- 12: Tasche
- 14: Dichtungsring
- 15: Gewindezapfen
- 16: Welle
- 17: Oberer Gehäuseteil
- 18: Flansch
- 19: Bohrung
- 20: Gebogener Gehäuseabschnitt
- 21: Achsbohrung
- 22: Erweiterung
- 23: Rippe
- 24: Verwirbelungskante
- 25: Störkontur

## Patentansprüche

1. Rohrweiche (1),
die für eine Verwendung in einer Fütterungsanlage bestimmt ist, bei der das Futter durch Rohrleitungsabschnitte zu Fütterungsstellen gefördert wird,
mit einem Gehäuse (2),
drei Rohrleitungsanschlüssen
und einer Zunge (6), die innerhalb des Gehäuses (2) zwischen zwei Endstellungen in der Art beweglich ist, dass eine Strömungsverbindung von einem ersten Rohrleitungsanschluss wahlweise zu einem zweiten oder zu einem dritten Rohrleitungsanschluss geschaffen wird,
**dadurch gekennzeichnet,**
**dass** ein durch das Gehäuse gebildeter Absatz an der inneren Oberfläche der Gehäusewand verläuft, welcher den Schwenkweg der Zunge eine Endstellung schaffend begrenzt und der Absatz dazu ausgestaltet ist, der Zunge unmittelbar anzuliegen.

2. Rohrweiche (1) nach Anspruch 1,
**dadurch gekennzeichnet,**
**dass** das Gehäuse (2) zweiteilig ausgestaltet ist,
und die Zunge (6) sowie deren Schwenkachse innerhalb des Gehäuses (2) angeordnet sind.

3. Rohrweiche (1) nach Anspruch 2,
**dadurch gekennzeichnet,**
**dass** das Gehäuse (2) in Form von zwei Halbschalen ausgestaltet ist.

4. Rohrweiche (1) nach einem der vorhergehenden Ansprüche,
**dadurch gekennzeichnet,**
**dass** das Gehäuse (2) aus Kunststoff besteht.

5. Rohrweiche (1) nach einem der vorhergehenden Ansprüche,
**dadurch gekennzeichnet,**
**dass** das Gehäuse (2) im Druckguss- oder Spritzgussverfahren hergestellt ist und bereichsweise unterschiedliche Wandstärken aufweist.

6. Rohrweiche (1) nach Anspruch 5,
**dadurch gekennzeichnet,**
**dass** in dem Gehäuse (2) eine Tasche (12) angeordnet ist, in welche der außen umlaufende Rand der Zunge (6) zumindest bereichsweise in einer der Endstellungen der Zunge (6) eintaucht.

7. Rohrweiche (1) nach Anspruch 5 oder 6,
**dadurch gekennzeichnet,**
**dass** im Inneren des Gehäuses (2) zwei miteinander fluchtende Lagerstellen angeordnet sind, in denen eine Schwenkachse der Zunge (6) gelagert ist.

8. Rohrweiche (1) nach einem der vorhergehenden Ansprüche,
**dadurch gekennzeichnet,**
**dass** stromaufwärts vor der Zunge (6) im Inneren des Gehäuses (2) eine Verwirbelungskante angeordnet ist.

9. Rohrweiche (1) nach Anspruch 8,
**dadurch gekennzeichnet,**
**dass** die Verwirbelungskante in der Art ausgestaltet ist, dass sich der innere, freie Gehäusequerschnitt erweitert.

10. Rohrweiche (1) nach Anspruch 8,
**dadurch gekennzeichnet,**
**dass** die Verwirbelungskante in der Art ausgestaltet ist, dass ein Vorsprung in den inneren, freien Gehäusequerschnitt ragt und an seinem in Strömungsrichtung hinteren Ende eine Abrisskante bildet.

11. Rohrweiche (1) nach einem der vorhergehenden Ansprüche,
**dadurch gekennzeichnet,**
**dass** die Schwenkachse der Zunge (6) nahe einem Gehäuseabschnitt (20) verläuft,
wobei zwischen dem Gehäuseabschnitt (20) und der Zunge (6) ein Dichtungselement angeordnet ist,
und der Gehäuseabschnitt (20) zwei Anschlagkanten aufweist, die jeweils parallel zur Schwenkachse der Zunge (6) verlaufen und denen das Dichtungselement in den beiden Schwenkstellungen der Zunge (6) dicht anliegt.

12. Rohrweiche (1) nach einem der vorhergehenden Ansprüche,
**dadurch gekennzeichnet,**
**dass** die Zunge (6) zwei Zungenplatten (8) aufweist, zwischen denen eine Dichtungsscheibe (9) angeordnet ist, wobei die Dichtungsscheibe (9) über den Rand der beiden Zungenplatten (8) hinausragt und eine außen umlaufende Dichtlippe (10) der Zunge (6) bildet.

13. Rohrweiche (1) nach den Ansprüchen 11 und 12,
**dadurch gekennzeichnet,**
**dass** die Dichtungsscheibe (9) sich durch die Schwenkachse hindurch erstreckt und das Dichtungselement zwischen dem gebogenen Gehäuseabschnitt (20) und der Zunge (6) bildet.

14. Rohrweiche (1) nach einem der vorhergehenden Ansprüche,
**dadurch gekennzeichnet,**
**dass** die beiden Gehäuseteile (11, 17) gemeinsam eine das Gehäuse (2) nach außen abdichtende Dichtung bilden.

15. Rohrweiche (1) nach einem der Ansprüche 4 bis 14,
**dadurch gekennzeichnet,**
**dass** das aus Kunststoff bestehende Gehäuse (2) elektrostatisch ableitfähig ausgestaltet ist.

16. Rohrweiche (1) nach einem der vorhergehenden Ansprüche,
**dadurch gekennzeichnet,**
**dass** die Zunge (6) aus einem metallischen Werkstoff besteht.

17. Rohrweiche (1) nach einem der vorhergehenden Ansprüche,
**dadurch gekennzeichnet,**
**dass** die Innenkontur des Gehäuses (2) eine Verzweigung des Strömungswegs von dem ersten Rohrleitungsanschluss zu dem zweiten und dem dritten Rohrleitungsanschluss schafft,
wobei ein runder Querschnitt des ersten Rohrleitungsanschlusses sich in der Art gabelt, dass auch in dem jeweiligen Übergangsbereich von dem ersten Rohrleitungsanschluss zu dem zweiten und dem dritten Rohrleitungsanschluss eine zumindest halbrunde Querschnittskontur des jeweiligen Übergangsbereichs beibehalten wird.
